(19) Europäisches Patentamt / European Patent Office / Office européen des brevets

(11) **EP 4 571 106 A1**

(12) **EUROPÄISCHE PATENTANMELDUNG**

(43) Veröffentlichungstag:
**18.06.2025   Patentblatt 2025/25**

(21) Anmeldenummer: **24215003.5**

(22) Anmeldetag: **25.11.2024**

(51) Internationale Patentklassifikation (IPC):
**F04B 13/00** *(2006.01)*        **F04B 15/02** *(2006.01)*
**G01N 11/04** *(2006.01)*

(52) Gemeinsame Patentklassifikation (CPC):
**F04B 13/00; F04B 15/02; G01N 11/04;**
F04B 2205/05

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **12.12.2023   DE 102023134814**

(71) Anmelder: **Netzsch-Gerätebau GmbH**
**95100 Selb (DE)**

(72) Erfinder:
• **Weigl, Stefan**
**84453 Mühldorf (DE)**

• **Schmitt, Thomas**
**84494 Lohkirchen (DE)**
• **Sinseder, Dominik**
**84405 Dorfen (DE)**
• **Remmler, Torsten**
**72119 Ammerbuch (DE)**
• **Levente, Szántó**
**95028 Hof (DE)**
• **Krist, Georg**
**95615 Marktredwitz (DE)**
• **Brunner, Martin**
**95176 Konradsreuth (DE)**
• **Weiland, Lars**
**95173 Schönwald (DE)**

(54) **VERDRÄNGERPUMPE UND PUMPENSYSTEM**

(57)     Es wird eine Verdrängerpumpe zum Fördern von Fördergut beschrieben, umfassend eine Messanordnung mit mindestens einem Messkanal, der von zumindest einem Teil des von der Pumpe geförderten Förderguts durchströmbar ist, wobei der mindestens eine Messkanal einen unrunden Querschnitt aufweist und die Messanordnung eine Drucksensoranordnung zum Erfassen von Drücken aufweist, die an in Durchflussrichtung des mindestens einen Messkanals beabstandeten Positionen wirken, wenn der mindestens eine Messkanal von dem zumindest einen Teil des von der Pumpe geförderten Förderguts durchströmt wird. Ferner wird ein System mit der Verdrängerpumpe und einer Steuereinheit beschrieben.

Fig. 1

**Beschreibung**

Die vorliegende Erfindung betrifft eine Verdrängerpumpe und ein Pumpensystem mit einer solchen Verdrängerpumpe.

Verdrängerpumpen wie z.B. Exzenterschneckenpumpen, Drehkolbenpumpen, Schraubenspindelpumpen oder Schlauchpumpen dienen dazu, Fördergut zu fördern. Bei dem Fördergut handelt es sich um fließfähiges Fördergut, insbesondere um flüssiges oder (z.B. niedrig- oder zäh-) viskoses Fördergut. Beispiele derartiger Fördergüter umfassen Prozessflüssigkeiten wie Kühlflüssigkeiten, Öle, Lacke und Farben, die bei der Herstellung eines Werkstücks eingesetzt werden. Als weitere Beispiele seien Abwasser und Schlamm genannt.

Zwar ermöglichen gängige Verdrängerpumpen ein Fördern des Förderguts, allerdings gestatten sie keine Analyse desselben. Insbesondere die Viskosität des Förderguts kann in bestimmten Szenarien von Interesse sein. Bei bekannten Lösungen wird zur Analyse des Förderguts im Stillstand der Verdrängerpumpe eine Probe des Förderguts entnommen. Die Probe wird anschließend in einem Labor analysiert, beispielsweise um die Viskosität des Förderguts zu bestimmen. Diese Herangehensweise ist arbeits- und zeitintensiv.

Vor diesem Hintergrund ist es eine Aufgabe der vorliegenden Erfindung, eine Verdrängerpumpe bereitzustellen, die eine Analyse des Förderguts ermöglicht.

Erfindungsgemäß wird eine Verdrängerpumpe gemäß Anspruch 1 und ein Pumpensystem gemäß Anspruch 10 bereitgestellt.

Die Verdrängerpumpe zum Fördern von Fördergut umfasst eine Messanordnung mit mindestens einem Messkanal, der von zumindest einem Teil des von der Pumpe geförderten Förderguts durchströmbar ist. Der zumindest eine Teil des von der Pumpe geförderten Förderguts entspricht insbesondere einem Teil des Volumenstroms des von der Pumpe geförderten Förderguts. Der zumindest eine Teil des von der Pumpe geförderten Förderguts kann als Volumenstromanteil, Volumenanteil oder Mengenanteil bezeichnet werden.

Der mindestens eine Messkanal weist einen unrunden Querschnitt auf. Der Querschnitt ist ein Schnitt durch den mindestens einen Messkanal orthogonal zu dessen Durchflussrichtung. Der Querschnitt kann (z.B. über eine gesamte Länge des mindestens einen Messkanals) in Durchflussrichtung des mindestens einen Messkanals konstant sein.

Die Messanordnung weist eine Drucksensoranordnung zum Erfassen von Drücken auf, die an in Durchflussrichtung des mindestens einen Messkanals beabstandeten Positionen wirken, wenn der mindestens eine Messkanal von dem zumindest einen Teil des von der Pumpe geförderten Förderguts durchströmt wird. Diese Drücke können von einem Inneren des zumindest einen Messkanals nach außen wirken. Die Messanordnung oder/und die Drucksensoranordnung kann insbesondere Druckdifferenzen zwischen zwei oder mehr der erfassten Drücke bestimmen.

Eine derartige Verdrängerpumpe ermöglicht das Erfassen von Drücken entlang dem Messkanal mit unrundem Querschnitt. Diese Drücke sind je nach Fördergut unterschiedlich und ermöglichen daher eine direkte Analyse des Förderguts durch die Verdrängerpumpe. Der unrunde Querschnitt des Messkanals hat sich hierbei als besonders vorteilhaft erwiesen, da er ein für die Druckmessungen vorteilhaftes Strömungsprofil im Messkanal sicherstellt.

Der Querschnitt des mindestens einen Messkanals kann mindestens einen geradlinigen Abschnitt umfassen. In diesem Fall kann der mindestens eine Messkanal mindestens eine plane Seitenfläche umfassen, die den mindestens einen geradlinigen Abschnitt des Querschnitts bildet.

Der mindestens eine geradlinige Abschnitt kann mit einem seiner Enden in einer Ecke des Querschnitts münden oder mit seinen beiden Enden in jeweiligen Ecken des Querschnitts münden. Eine solche Ecke kann einen Winkel einschließen, der zwischen 10° und 170° liegt, beispielsweise zwischen 45° und 135°, insbesondere einen Winkel von 90°.

Der Querschnitt ist in einem Beispiel mehreckig. Hierbei können die Ecken von jeweils zwei des mindestens einen geradlinigen Abschnitts gebildet werden. Der Querschnitt kann ein Vieleck sein, wobei jede der Seiten des Vielecks einem des mindestens einen geradlinigen Abschnitts entspricht.

Der Querschnitt kann rechteckig sein. Hierbei kann jede der vier Seiten des rechteckigen Querschnitts einem des mindestens einen geradlinigen Abschnitts entsprechen.

Beispielsweise ist die Drucksensoranordnung dazu eingerichtet, einen von einem Inneren des mindestens einen Messkanals auf eine Sensorfläche (z.B. nach außen) wirkenden Druck zu erfassen. Hierzu kann die Drucksensoranordnung einen Drucksensor aufweisen, der den auf die Sensorfläche wirkenden Druck erfasst. Für jeden zu erfassenden Druck kann eine separate Sensorfläche und ein separater Drucksensor vorgesehen sein.

Die Sensorfläche kann einen Abschnitt des Querschnitts des Messkanals bilden. Die Sensorfläche kann im Wesentlichen eben ausgebildet sein. Die Sensorfläche bildet insbesondere einen des mindestens einen geradlinigen Abschnitts des Querschnitts. Die Sensorfläche kann also einen planen Abschnitt einer Seitenwand des mindestens einen Messkanals bilden. In einer alternativen Ausgestaltung kann die Sensorfläche gekrümmt ausgestaltet sein. In diesem Fall ist es möglich, dass die Sensorfläche einen gekrümmten Abschnitt des Querschnitts bildet. Die Sensorfläche kann sich über einen Teil der Länge des mindestens einen Messkanals in dessen Durchflussrichtung erstrecken. Derartige Ausgestaltungen der Sensorfläche können Verwirbelungen und Strömungsumlenkungen im Messkanal verringern, was eine zuverlässigere Druckmessung ermöglicht.

Gemäß einem Beispiel weist der Querschnitt eine Höhe auf, die geringer als dessen Breite ist. Die Sensorfläche kann in diesem Fall in Breitenrichtung des Querschnitts verlaufen. Die Sensorfläche kann sich also insbesondere über eine gesamte Breite des Messkanals erstrecken.

Die Messanordnung kann einen Strömungsgleichrichter umfassen, der stromaufwärts des mindestens einen Messkanals in einem Strömungspfad des von der Pumpe geförderten Förderguts angeordnet ist. Der Strömungsgleichrichter kann unmittelbar vor dem mindestens einen Messkanal angeordnet sein, insbesondere an diesen anschließen. Der Strömungsgleichrichter kann eine sich in Durchflussrichtung verjüngende Einlassöffnung des mindestens einen Messkanals bilden. Die Einlassöffnung kann zum Beispiel abgerundet sein, sodass sie in Durchflussrichtung keine Stufe zum Messkanal bildet.

Der mindestens eine Messkanal oder/und der Strömungsgleichrichter können so ausgelegt sein, dass (z.B. in einem vorgegebenen Fördergeschwindigkeitsbereich der Verdrängerpumpe oder/und für einen vorbestimmten Viskositätsbereich des Förderguts) ein laminares Strömungsprofil des geförderten Förderguts im Messkanal sichergestellt ist, insbesondere in Breitenrichtung oder/und in Höhenrichtung des mindestens einen Messkanals.

Der mindestens eine Messkanal kann mehrere Messkanäle umfassen, die jeweils von zumindest einem Teil des von der Pumpe geförderten Förderguts durchströmbar sind. Diese Messkanäle unterscheiden sich insbesondere in ihren Querschnitten. Die Querschnitte können sich in ihrem Flächeninhalt unterscheiden. Die Querschnitte können in derselben geometrischen Form (z.B. rechteckig) ausgebildet sein, aber unterschiedliche (z.B. skalierte) Dimensionen dieser geometrischen Form aufweisen. So ist denkbar, dass als Querschnitte unterschiedlich große Vielecke mit demselben Seitenlängenverhältnis vorgesehen sind. Die (z.B. rechteckigen) Querschnitte der Messkanäle können sich insbesondere in ihrer Höhe unterscheiden und dieselbe Breite aufweisen. Die Drucksensoranordnung ist in diesem Fall insbesondere zum Erfassen der Drücke in jedem der Messkanäle ausgebildet.

Beispielsweise sind die Messkanäle der Messanordnung fluidisch parallelgeschaltet. In diesem Fall unterscheiden sich die Messkanäle auch in dem zumindest einen Teil des von der Pumpe geförderten Förderguts, der den jeweiligen Messkanal durchströmen kann. Jedem Messkanal kann also ein anderer Volumenstromanteil des von der Pumpe geförderten Förderguts zugeordnet sein.

Die Messanordnung kann ein Bauteil umfassen, in welchem jeder des mindestens einen Messkanals ausgebildet ist. Das Bauteil kann einstückig ausgebildet sein. Beispielsweise ist das Bauteil aus keramischem Material gebildet, um eine hohe Abrasionsfestigkeit sicherzustellen. Alternativ oder zusätzlich kann der Strömungsgleichrichter aus keramischem Material gefertigt sein. Die Messkanäle können in das Bauteil (z.B. durch Fräsen, Stanzen oder Sägen) eingebracht sein. Es ist auch denkbar, dass das Bauteil mit den innenliegenden Messkanälen geformt wird. Das Bauteil kann im Wesentlichen zylindrisch sein und sich entlang einer Durchflussrichtung mindestens eines der Messkanäle erstrecken. Das Bauteil kann radial verlaufende, in Durchflussrichtung voneinander beabstandete Aussparungen zur Aufnahme der Drucksensoren der Drucksensoranordnung aufweisen. Für jeden Messkanal können zwei oder mehr der Aussparungen vorgesehen sein. Die Aussparungen können als Durchgangsloch bis in den jeweiligen Messkanal gebildet sein. In diesem Fall kann die Sensorfläche Teil des in die Aussparung eingesetzten Drucksensors sein.

Das Bauteil kann von einem rohrförmigen Gehäuse ummantelt sein, welches als Gehäuserohr bezeichnet werden kann. Das Bauteil oder/und das Gehäuserohr können so ausgebildet sein, dass eine virtuelle Umhüllende des Bauteils oder/und Gehäuserohrs in Durchflussrichtung konkav gekrümmt ist. In anderen Worten können das Bauteil oder/und das Gehäuserohr bauchig ausgebildet sein. Das Gehäuserohr kann Kühlrippen umfassen, um das Fördergut im Messkanal passiv zu temperieren. Es kann eine Heiz- oder/und Kühlvorrichtung vorgesehen sein, die dazu eingerichtet sind, eine definierte Temperatur des Gehäuses, des Bauteils oder/und des Förderguts im Messkanal sicherzustellen.

Die Durchflussrichtungen der Messkanäle können parallel zueinander verlaufen. Alternativ oder zusätzlich kann vorgesehen sein, dass Breitenrichtungen der Querschnitte der Messkanäle schräg zueinander verlaufen. Insbesondere kann vorgesehen sein, dass der mindestens eine geradlinige Abschnitt des Querschnitts eines jeden Messkanals bezogen auf eine gemeinsame Achse (z.B. eine Längsachse des Bauteils) radial nach außen hin ausgerichtet ist. Außenliegende (z.B. Breiten-) Seiten der Querschnitte können tangential bezogen auf einen virtuellen Kreis angeordnet sein bzw. von einem Referenzpunkt (z.B. einen Punkt auf der Längsachse des Bauteils) denselben Abstand aufweisen.

Gemäß einem zweiten Aspekt wird ein Pumpensystem bereitgestellt. Das Pumpensystem umfasst die Verdrängerpumpe gemäß dem ersten Aspekt und eine Steuereinheit. Die Steuereinheit ist dazu eingerichtet, basierend auf den von der Drucksensoranordnung erfassten Drücken eine Viskosität des geförderten Förderguts oder/und eine Fördergeschwindigkeit (z.B. einen bereitgestellten Volumenstrom) der Verdrängerpumpe zu bestimmen.

Die Steuereinheit kann dazu ausgelegt sein, die Viskosität als viskoplastisch, strukturviskos, scherverdickend, Newton'sch oder Bingham'sch zu klassifizieren. Die Steuereinheit kann dazu ausgelegt sein, basierend auf den von der Drucksensoranordnung erfassten Drücken zu ermitteln, ob es sich bei dem Fördergut um ein Material mit oder ohne einer viskositätsabhängigen Scherrate oder/und um ein Material mit oder ohne Fließgrenze handelt. Hierzu können für mehrere der Messkanäle Viskositätswerte ermittelt werden, was auch als Viskositäts-Mehrpunktmessung bezeichnet werden kann.

Die Steuereinheit kann dazu eingerichtet sein, die Fördergeschwindigkeit der Verdrängerpumpe basierend auf einer Pumpendrehzahl der Verdrängerpumpe oder/und einem Pumpensteuersignal für die Verdrängerpumpe, und insbesondere basierend auf einer vorbekannten Pumpenkennlinie der Verdrängerpumpe zu bestimmen, und basierend auf der so bestimmten Fördergeschwindigkeit und den von der Drucksensoranordnung erfassten Drücken die Viskosität des geförderten Förderguts zu bestimmen. Diese Viskosität kann auch in Abhängigkeit mindestens eines Parameters (z.B. Scherrate oder/und Temperatur) bestimmt werden.

Die Steuereinheit ist insbesondere zum Ausführen eines oder mehrerer der folgenden Schritte eingerichtet: Ausgeben eines Werts der bestimmten Fördergeschwindigkeit oder/und eines Werts der bestimmten Viskosität; Detektieren eines Verschleißes der Verdrängerpumpe anhand der bestimmten Fördergeschwindigkeit oder/und Viskosität; Detektieren eines Schlupfs der Verdrängerpumpe anhand der bestimmten Fördergeschwindigkeit oder/und Viskosität; Steuern der Verdrängerpumpe anhand der bestimmten Fördergeschwindigkeit oder/und Viskosität; Steuern einer Viskositätsanpassungsvorrichtung anhand der bestimmten Fördergeschwindigkeit oder/und Viskosität, um die Viskosität des geförderten Förderguts anzupassen; Steuern einer Prozessanlage, die das geförderte Fördergut verarbeitet, anhand der bestimmten Fördergeschwindigkeit oder/und Viskosität.

Nachfolgend werden Ausführungsformen der Erfindung unter Bezugnahme auf die Figuren näher erläutert, wobei:

Fig. 1     eine schematische Darstellung eines Pumpensystems zeigt;

Fig. 2     eine perspektivische Darstellung eines Messanordnung zeigt;

Fig. 3     einen Längsschnitt durch eine Messanordnung zeigt;

Fig. 4     einen Querschnitt eines Messkanals zeigt;

Fig. 5     einen Querschnitt durch ein Bauteil mit mehreren Messkanälen zeigt;

Fig. 6     eine erste beispielhafte fluidische Verschaltung zeigt; und

Fig. 7     eine zweite beispielhafte fluidische Verschaltung zeigt.

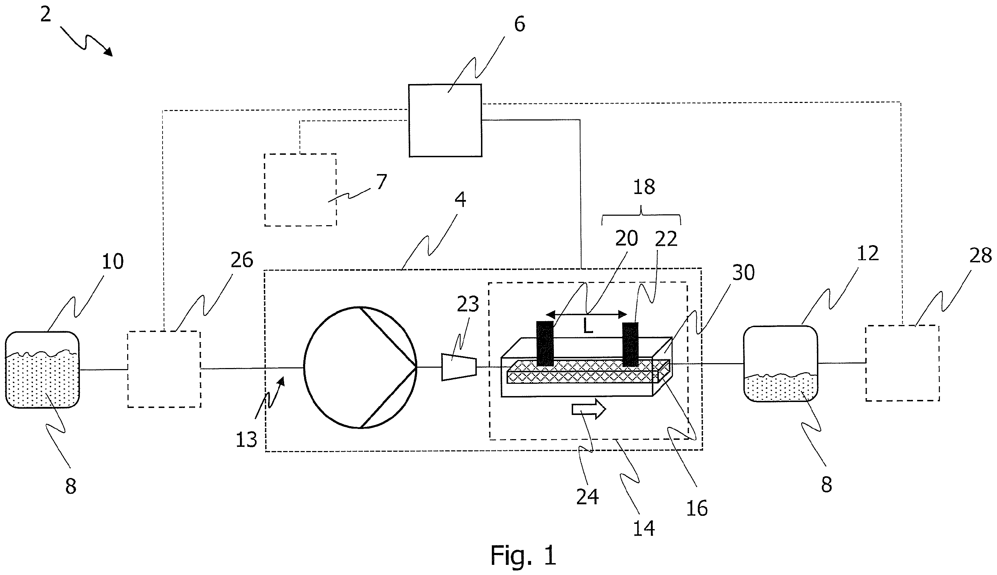

Fig. 1 zeigt eine schematische Darstellung eines Pumpensystems 2. Das Pumpensystem 2 umfasst eine Verdrängerpumpe 4 und eine mit der Verdrängerpumpe 4 kommunikativ verbundene Steuereinheit 6. Die Steuereinheit 6 kann mechanisch an der Pumpe 4 befestigt oder separat von der Pumpe 4 vorgesehen sein.

Die Verdrängerpumpe 4 kann eine Exzenterschneckenpumpe sein, wobei auch andere Arten von Verdrängerpumpen möglich sind. Die Verdrängerpumpe 4 ist zum Fördern von fließfähigem Füllgut 8 wie insbesondere Lack, Öl oder Suspensionen (z.B. Abwasser) aus einer Füllgutbevorratung 10 in eine Füllgutaufnahme 12 eingerichtet.

Die Verdrängerpumpe 4 umfasst eine Messanordnung 14. Die Messanordnung 14 ist im gezeigten Beispiel an einem stromabwärts liegenden Bereich der Pumpe 4 verortet. Alternativ könnte die Messanordnung 14 auch an dem durch das Bezugszeichen 13 angedeuteten stromaufwärts liegenden Bereich angeordnet sein. Die Messanordnung 14 umfasst in jedem Fall mindestens einen Messkanal 16 sowie eine Drucksensoranordnung 18 mit Drucksensoren 20, 22. Im gezeigten Beispiel sind für einen Messkanal 16 zwei Drucksensoren vorgesehen, es ist aber auch denkbar, für den Messkanal 16 drei, vier oder noch mehr Drucksensoren vorzusehen.

Der Messkanal 16 ist zumindest von einem Teil des von der Pumpe 4 geförderten Förderguts 8 durchströmbar. Die Drucksensoren 20, 22 sind voneinander in Durchflussrichtung 24 des Messkanals 16 beabstandet (z.B. Abstand L von Sensormitte zu Sensormitte) und können an den jeweiligen Positionen einen im Inneren des Messkanals 16 herrschenden Druck erfassen. Dieser Druck kann entweder als Absolutdruck oder als Differenzdruck (z.B. bezogen auf einen vorbestimmten Referenzdruck, insbesondere einen Atmosphärendruck in der Umgebung der Pumpe 4) erfasst werden.

Die Messanordnung 14 kann weitere Sensoren umfassen, insbesondere einen Temperatursensor zum Erfassen einer Temperatur des von der Pumpe 4 geförderten Förderguts. Es ist denkbar, dass die Messanordnung 14 für jeden Messkanal 16 einen oder mehrere Temperatursensoren zum Erfassen einer Temperatur des durch den entsprechenden Messkanal 16 transportierten Förderguts aufweist. Temperaturmessungen dieser Temperatursensoren können z.B. dazu genutzt werden, eine Schererwärmung zu erfassen. Es kann eine Heiz- oder/und Kühlvorrichtung 7 vorgesehen sein, die dazu eingerichtet ist oder sind, eine definierte Temperatur eines Gehäuses des Pumpensystems 2, eines Bauteils des Pumpensystems 2 oder/und des Förderguts im Messkanal 16 sicherzustellen.

Die Messanordnung kann auch einen Strömungsgleichrichter 23 aufweisen, der stromaufwärts des mindestens einen Messkanals 16 angeordnet ist und dazu dient, ein gewünschtes (z.B. laminares) Strömungsprofil des Förderguts im Messkanal 16 zu bewirken. Der Strömungsgleichrichter bildet im einfachsten Fall einen trichterförmigen Einlass des Messkanals 16 und kann insbesondere aus abrasionsresistentem Material wie z.B. Keramik gefertigt sein.

In Fig. 1 ist ferner eine optionale Viskositätsanpassungsvorrichtung 26 angedeutet. Diese kann die Viskosität des Förderguts anpassen, zum Beispiel durch Zugabe von Verdünnungsmittel oder Verdickungsmittel, durch Temperierung des Förderguts oder/und durch Anpassung einer Partikelgrößenverteilung im Fördergut (z.B. durch Mahlen im Fördergut enthaltener Partikel). Außerdem ist eine optionale Prozessanlage 28 angedeutet, die dazu eingerichtet ist, das von der Pumpe 4 geförderte Fördergut 8 in einem Herstellungs- oder/und Bearbeitungsprozess zu verwenden. Hierbei kann es sich z.B. um eine Beschichtungsanlage zum Aufbringen von Lack handeln, insbesondere zur Herstellung einer mehrlagigen Batteriezelle.

Die Steuereinrichtung 6 ist dazu ausgelegt, basierend auf den von der Drucksensoranordnung erfassten Drücken eine Viskosität des geförderten Förderguts oder/und eine Fördergeschwindigkeit der Verdrängerpumpe zu bestimmen. Die Viskosität kann basierend auf der Druckdifferenz der durch die Drucksensoren 20, 22 während des Durchströmens des Messkanals 16 erfassten Drücke sowie basierend auf dem Volumenstrom durch den Messkanal 16 und basierend auf der bekannten Geometrie des Messkanals bestimmt werden. Im gezeigten Beispiel wird der gesamte Volumenstrom des von der Pumpe 4 geförderten Förderguts durch den Messkanal 16 geleitet. Somit ergibt sich der Volumenstrom durch den Messkanal 16 direkt aus der Fördergeschwindigkeit der Verdrängerpumpe. Die Steuereinheit 6 kann dazu ausgelegt sein, diese Fördergeschwindigkeit zu bestimmen, basierend auf einer Pumpendrehzahl der Verdrängerpumpe 4 oder/und einem Pumpensteuersignal für die Verdrängerpumpe 4, und insbesondere basierend auf einer vorbekannten Pumpenkennlinie der Verdrängerpumpe 4. Insbesondere unter der Annahme, dass das Fördergut nicht kompressibel ist, ist es nicht notwendig, eine separate Volumenstrommessung zur Bestimmung der Viskosität vorzusehen.

Die Steuereinheit 6 kann basierend auf der bestimmten Fördergeschwindigkeit oder/und der bestimmten Viskosität einen entsprechenden Wert (z.B. an einen Bildschirm oder eine Datenverarbeitungsvorrichtung) ausgeben. Die bestimmte Fördergeschwindigkeit oder/und Viskosität kann auch von der Steuereinheit 6 weiterverarbeitet werden.

Wenn z.B. davon ausgegangen werden kann, dass die Viskosität konstant ist, sich jedoch die von den Sensoren 20, 22 erfassten Druckwerte über einen bestimmten Zeitraum verändern, kann auf eine sinkende Fördergeschwindigkeit der Förderpumpe geschlossen werden. Wenn in diesem Zeitraum die Pumpe 4 mit demselben Steuersignal (z.B. Pumpenfrequenz) gesteuert wurde, kann die Steuereinheit 6 darauf schließen, dass Verschleiß der Pumpe 4 vorliegt oder/und der Schlupf der Pumpe 4 gestiegen ist. Die Steuereinheit 6 kann dann eine Warnung ausgeben oder die Pumpe 4 nachregeln, bis die Druckwerte wieder in einen gewünschten Bereich fallen, der einem gewünschten Volumenstrom bei der bekannten konstanten Viskosität entspricht.

Wenn hingegen davon ausgegangen werden kann, dass die bestimmte Fördergeschwindigkeit der Pumpe 4 konstant ist, sich jedoch die von den Sensoren 20, 22 erfassten Druckwerte über einen bestimmten Zeitraum verändern, kann auf eine Änderung der Viskosität des Förderguts 8 geschlossen werden. Hierbei kann insbesondere die Temperatur des Förderguts 8 berücksichtigt werden, zum Beispiel um festzustellen, ob die Änderung lediglich temperaturbedingt ist oder andere Ursachen hat. Die Steuereinheit 6 kann dann eine Warnung ausgeben oder die Viskositätsanpassungsvorrichtung 26 ansteuern, um die Viskosität in Richtung eines gewünschten Werts anzupassen. Alternativ oder zusätzlich kann die Steuereinheit 6 die Prozessanlage 28 über die Viskositätsänderung informieren, sodass der Fertigungsprozess entsprechend angepasst wird.

Die Druckwerte können zeitlich analysiert werden, um eine unerwünschte Pulsation der Pumpe 4 insbesondere nach deren Einschalten zu detektieren. Die Steuereinheit 6 kann die Pumpe 4 dann entsprechend nachregeln, um eine solche Pulsation zu minimieren. Im Fall einer Exzenterschneckenpumpe kann das Steuern oder Nachregeln der Pumpe 4 z.B. ein Anpassen einer Lage eines Stators der Pumpe 4 umfassen.

In Durchflussrichtung des mindestens einen Messkanals 16 kommt im Betrieb der Pumpe 4, also wenn der Messkanal 16 durchflossen wird, zu einem Druckabfall. Der Druckabfall kann insbesondere linear entlang der Durchflussrichtung erfolgen. Die beiden Drucksensoren 20, 22, erfassen somit unterschiedlich große Drücke, die von dem Fördergut 8 im Messkanal 16 aufgebracht werden. Aus dieser Druckdifferenz lässt sich insbesondere die Viskosität des Förderguts 8 bestimmen. Es gilt:

$$\eta = \sigma / \dot{\gamma} \qquad \text{(Formel 1)}$$

Wobei $\eta$ die Viskosität angibt, abhängig von Schubspannung $\sigma$ und Scherrate $\dot{\gamma}$. Unter Kenntnis eines Kanal- geometrie-Faktors K des Messkanals 16 ergibt sich die Viskosität $\eta$ abhängig von der Druckdifferenz $\Delta p$ zwischen den beiden von den Drucksensoren 20, 22 erfassten Druckwerten und dem durch den Kanal 16 fließenden Volumenstrom V:

$$\eta = \Delta p / \dot{V} * K \qquad \text{(Formel 2)}$$

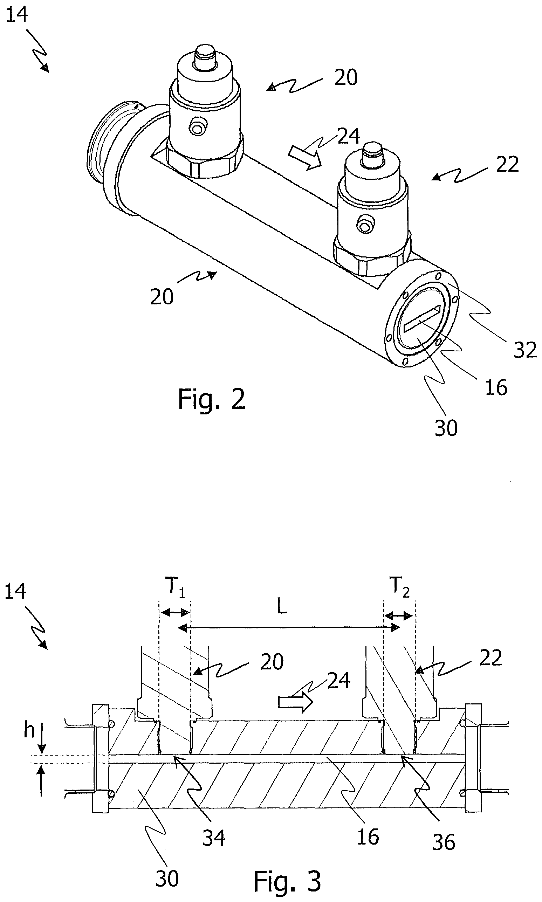

Fig. 2 zeigt eine perspektivische Darstellung einer beispielhaften Messanordnung 14. In diesem Beispiel umfasst die Messanordnung 14 ein im Wesentlichen zylindrisches Bauteil 30, in welchem der Messkanal 16 ausgebildet ist. Der Messkanal 16 und das Bauteil 30 erstrecken sich beide entlang der Durchflussrichtung 24. Das Bauteil 30 ist in Fig. 2 in ein Gehäuserohr 32 eingebettet, was jedoch nicht notwendigerweise der Fall ist.

Fig. 3 zeigt einen Längsschnitt entlang der Durchflussrichtung 24 durch eine beispielhafte Messanordnung 14. In diesem Beispiel ist kein Gehäuserohr 32 vorhanden, das Bauteil 30 ist also nicht ummantelt. In Fig. 3 ist zu erkennen, dass ein jeder Sensor eine Sensorfläche 34, 36 aufweist, die den Messkanal 16 seitlich begrenzt. Diese Sensorflächen 34, 36 sind voneinander in Durchflussrichtung 24 beabstandet und erstrecken sich jeweils nur über einen Teil $T_1$ bzw. $T_2$ der Länge des Messkanals 16 in der Durchflussrichtung 24. Die Sensorflächen 34, 36 sind im gezeigten Beispiel im Vergleich zur Höhe h des Messkanals 16 vergleichsweise groß ($T_1 > h$, $T_2 > h$). So kann im Messkanal 16 eine hohe Scherrate bereitgestellt werden. Es ist auch denkbar, den Messkanal 16 anders zu dimensionieren ($T_1 = h$ oder $T_1 < h$; oder /und $T_2 = h$ oder $T_2 < h$), zum Beispiel falls eine geringere Scherrate gewünscht ist. Die Mitten der jeweiligen Sensorflächen 34, 36 sind in einem Abstand L in Durchflussrichtung 24 versetzt.

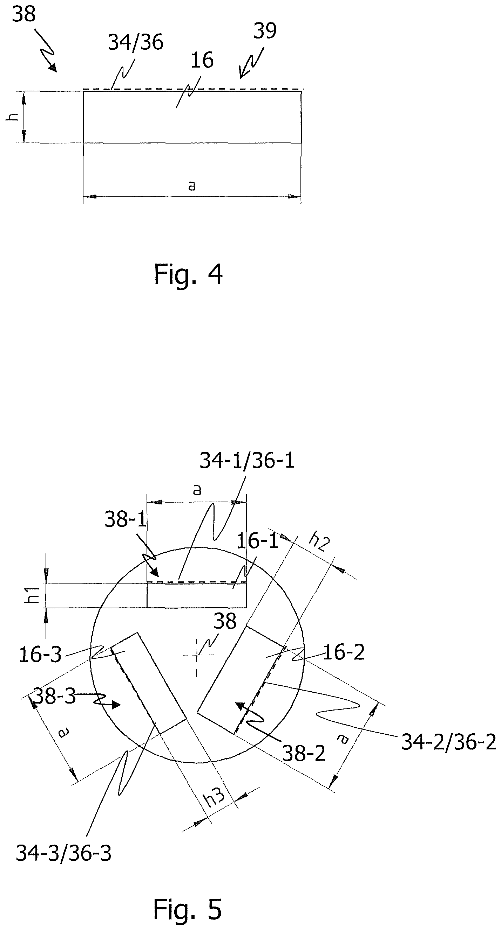

Der mindestens eine Messkanal 16 weist einen unrunden Querschnitt 38 auf, insbesondere einen Querschnitt mit einem oder mehreren geradlinigen Abschnitten 39. Die Sensorflächen 34, 36 können hierbei einen dieser geradlinigen Abschnitte bilden. Fig. 4 zeigt ein Beispiel für einen solchen unrunden Querschnitt 38 des mindestens einen Messkanals 16. Der Querschnitt 38 ist in diesem Beispiel rechteckig und weist eine Höhe h auf, die geringer ist als die Breite a. Die ebenen (z.B. ebenfalls rechteckigen oder runden) Sensorflächen 34 und 36 verlaufen in Breitenrichtung des Querschnitts 38 des Messkanals 16 über dessen gesamte Breite und bilden dessen Oberseite.

Im Fall des Querschnitts 38 gilt für den Kanalgeometrie-Faktor K des Messkanals 16:

$$K = (a * h\text{^}3) / (12 * L * (1 + h/a)) \hspace{3cm} \text{(Formel 3)}$$

In diesem Fall ergibt sich die Viskosität des Förderguts 8 anhand der Druckdifferenz $\Delta p$ und dem Volumenstrom V als:

$$\eta = (\Delta p / \dot{V}) * (a * h\text{^}3) / (12 * L * (1 + h/a)) \hspace{2cm} \text{(Formel 4)}$$

Bei bekanntem Volumenstrom kann also die Viskosität anhand der erfassten Drücke berechnet werden, bei bekannter Viskosität lässt sich der Volumenstrom anhand der erfassten Drücke berechnen. Dies kann auch bei anderen Kanalgeometrien der Fall sein, wobei dann der Kanalgeometrie-Faktor K gegebenenfalls von Formel 3 abweicht.

Der mindestens eine Messkanal 16 kann mehrere Messkanäle 16-1, 16-2, ..., 16-n umfassen. In anderen Worten kann die Messanordnung 14 mehrere entsprechend ausgebildete Messkanäle 16 umfassen. Die Meskanäle können sich voneinander insbesondere in ihrem Querschnitt 38-1, 38-2, ..., 38-n unterscheiden. So können für unterschiedliche Kanalquerschnitte jeweilige Werte der Druckdifferenz $\Delta p$ bestimmt werden. Hieraus lässt sich für jeden der Messkanäle ein entsprechender Viskositätswert des Förderguts ermitteln. Durch Vergleichen dieser Viskositätswerte kann die Steuereinheit 6 auf die scherratenabhängige Viskosität des Förderguts schließen und insbesondere bestimmen, ob das Fördergut strukturviskos oder scherverdickend ist.

Fig. 5 zeigt ein Beispiel für eine Anordnung mehrerer Messkanäle 16-a, 16-2, 16-3, die alle in demselben Bauteil 30 ausgebildet sind deren Durchflussrichtungen parallel verlaufen. Die Messkanäle 16-1, 16-2, 16-3 weisen hierbei jeweils einen rechteckigen Querschnitt 38-1, 38-2, 38-3 auf. Die Querschnitte weisen zwar dieselbe Breite a, aber unterschiedliche Höhen h1, h2, h3 auf.

Für jeden Messkanal 16-1, 16-2, 16-3 sind entsprechende Drucksensoren mit Sensorflächen 34-1, 34-2, 34-3 und 36-1, 36-2, 36-3 vorgesehen. Auch hier bilden die Sensorflächen die jeweilige Oberseite des jeweiligen Messkanals. Die Sensorflächen sind dabei bezogen auf eine in Durchflussrichtung verlaufende Längsachse 38 des Bauteils 30 radial auswärts ausgerichtet. So können die Drucksensoren aus unterschiedlichen Richtungen an dem Bauteil 30 befestigt werden, um die Drücke in den verschieden dimensionierten Kanälen zu messen.

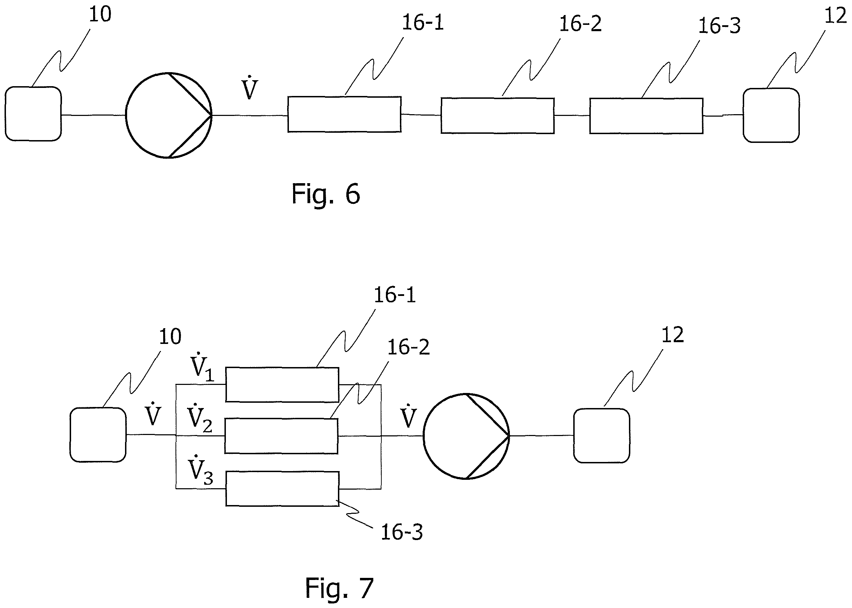

Die Messkanäle 16-1, 16-2, 16-3 können fluidisch in Serie oder parallel zueinander geschaltet sein. Eine entsprechende Serienschaltung ist schematisch in Fig. 6 dargestellt, Fig. 7 veranschaulicht eine Parallelschaltung. In der Serienschaltung kann ein jeder Messkanal 16-1, 16-2, 16-3 von demselben Volumenstrom V durchflossen werden. In der Parallelschaltung teilt sich der Volumenstrom V hingegen in drei Teil- Ströme$\dot{V}_1$, $\dot{V}_2$, $\dot{V}_3$auf, von denen ein jeder durch einen anderen der Messkanäle 16-1, 16-2, 16-3 fließt.

Es versteht sich, dass anstelle von drei Messkanälen nur einer, nur zwei, vier oder mehr Messkanäle 16 vorgesehen sein können. Diese können gruppenweise parallelgeschaltet sein oder/und gruppenweise in Serie geschaltet sein. Einer oder mehr der Messkanäle 16 können stromaufwärts, und einer oder mehr der Messkanäle 16 können stromabwärts der Exzenterschneckenpumpe angeordnet sein. Es ist auch denkbar, dass parallel zu der Pumpe 4 eine weitere Pumpe (z.B. mit größerer Förderleistung) eingesetzt wird, um Fördergut von der Füllgutbevorratung 10 in die Füllgutaufnahme 12 zu fördern. Die Messanordnung 14 kann außerhalb eines Pumpengehäuses der Verdrängerpumpe 4 angeordnet sein, beispielsweise in einem mit der Verdrängerpumpe 4 fluidisch verbundenen Leitungssystem. Weitere Vorteile und Modifikationen können sich für den Fachmann aus der vorliegenden Offenbarung ergeben.

**Patentansprüche**

1. Verdrängerpumpe (4) zum Fördern von Fördergut (8), umfassend eine Messanordnung (14) mit mindestens einem Messkanal (16, 16-1, 16-2, 16-3), der von zumindest einem Teil des von der Pumpe (4) geförderten Förderguts (8) durchströmbar ist, wobei der mindestens eine Messkanal (16, 16-1, 16-2, 16-3) einen unrunden Querschnitt (38, 38-1, 38-2, 38-3) aufweist und die Messanordnung (14) eine Drucksensoranordnung (18) zum Erfassen von Drücken aufweist, die an in Durchflussrichtung (24) des mindestens einen Messkanals (16, 16-1, 16-2, 16-3) beabstandeten Positionen wirken, wenn der mindestens eine Messkanal (16, 16-1, 16-2, 16-3) von dem zumindest einen Teil des von der Pumpe (4) geförderten Förderguts (8) durchströmt wird.

2. Verdrängerpumpe (4) gemäß Anspruch 1, wobei der Querschnitt (38, 38-1, 38-2, 38-3) des mindestens einen Messkanals (16, 16-1, 16-2, 16-3) mindestens einen geradlinigen Abschnitt (39) umfasst.

3. Verdrängerpumpe (4) gemäß Anspruch 2, wobei der Querschnitt (38, 38-1, 38-2, 38-3) mehreckig ist.

4. Verdrängerpumpe (4) gemäß den Ansprüchen 2 und 3, wobei der Querschnitt (38, 38-1, 38-2, 38-3) rechteckig ist und jede der vier Seiten des rechteckigen Querschnitts (38, 38-1, 38-2, 38-3) einem des mindestens einen geradlinigen Abschnitts (39) entspricht.

5. Verdrängerpumpe (4) gemäß einem der Ansprüche 2 bis 4, wobei die Drucksensoranordnung (18) dazu eingerichtet ist, einen von einem Inneren des mindestens einen Messkanals (16, 16-1, 16-2, 16-3) auf eine Sensorfläche (34, 36) wirkenden Druck zu erfassen, wobei die Sensorfläche (34, 36) einen des mindestens einen geradlinigen Abschnitts (39) des Querschnitts (38, 38-1, 38-2, 38-3) bildet und sich über einen Teil der Länge des mindestens einen Messkanals (16, 16-1, 16-2, 16-3) in dessen Durchflussrichtung (24) erstreckt.

6. Verdrängerpumpe (4) gemäß Anspruch 5, wobei der Querschnitt (38, 38-1, 38-2, 38-3) eine Höhe (h, h1, h2, h3) aufweist, die geringer als dessen Breite (a) ist, und wobei die Sensorfläche (34, 36) in Breitenrichtung des Querschnitts (38, 38-1, 38-2, 38-3) verläuft.

7. Verdrängerpumpe (4) gemäß einem der Ansprüche 1 bis 6, wobei der mindestens eine Messkanal (16, 16-1, 16-2, 16-3) mehrere Messkanäle (16-1, 16-2, 16-3) umfasst, die jeweils von zumindest einem Teil des von der Pumpe (4) geförderten Förderguts (8) durchströmbar sind, wobei sich die Messkanäle (16-1, 16-2, 16-3) in ihren Querschnitten (38-1, 38-2, 38-3) unterscheiden.

8. Verdrängerpumpe (4) gemäß Anspruch 7, wobei die Messkanäle (16-1, 16-2, 16-3) fluidisch parallelgeschaltet sind und die Messanordnung (14) ein Bauteil (30) umfasst, in welchem jeder der Messkanäle (16-1, 16-2, 16-3) ausgebildet ist.

9. Verdrängerpumpe (4) gemäß Anspruch 7 oder 8, wobei die Durchflussrichtungen (24) der Messkanäle (16-1, 16-2, 16-3) parallel zueinander verlaufen oder/und Breitenrichtungen der Querschnitte (38-1, 38-2, 38-3) der Messkanäle (16-1, 16-2, 16-3) schräg zueinander verlaufen.

10. Pumpensystem (2), umfassend eine Verdrängerpumpe (4) gemäß einem der Ansprüche 1 bis 9 und eine Steuereinheit (6), die dazu eingerichtet ist, basierend auf den von der Drucksensoranordnung (18) erfassten Drücken eine Viskosität des geförderten Förderguts (8) oder/und eine Fördergeschwindigkeit der Verdrängerpumpe (4) zu bestimmen.

11. Pumpensystem (2) gemäß Anspruch 10, wobei die Steuereinheit (6) dazu eingerichtet ist, die Fördergeschwindigkeit der Verdrängerpumpe (4) basierend auf einer Pumpendrehzahl der Verdrängerpumpe (4) oder/und einem Pumpensteuersignal für die Verdrängerpumpe (4), und insbesondere basierend auf einer vorbekannten Pumpenkennlinie der Verdrängerpumpe (4) zu bestimmen, und basierend auf der so bestimmten Fördergeschwindigkeit und den von der Drucksensoranordnung (18) erfassten Drücken die Viskosität des geförderten Förderguts (8) zu bestimmen.

12. Pumpensystem (2) gemäß Anspruch 10 oder 11, wobei die Steuereinheit (6) ferner zum Ausführen eines oder mehrerer der folgenden Schritte eingerichtet ist:

Ausgeben eines Werts der bestimmten Fördergeschwindigkeit oder/und eines Werts der bestimmten Viskosität;

Detektieren eines Verschleißes der Verdrängerpumpe (4) anhand der bestimmten Fördergeschwindigkeit oder/und Viskosität;

Detektieren eines Schlupfs der Verdrängerpumpe (4) anhand der bestimmten Fördergeschwindigkeit oder/und Viskosität;

Steuern der Verdrängerpumpe (4) anhand der bestimmten Fördergeschwindigkeit oder/und Viskosität;

Steuern einer Viskositätsanpassungsvorrichtung (26) anhand der bestimmten Fördergeschwindigkeit oder/und Viskosität, um die Viskosität des geförderten Förderguts (8) anzupassen;

Steuern einer Prozessanlage (28), die das geförderte Fördergut (8) verarbeitet, anhand der bestimmten Fördergeschwindigkeit oder/und Viskosität.

Fig. 1

EP 4 571 106 A1

Fig. 2

Fig. 3

Fig. 4

Fig. 5

Fig. 6

Fig. 7

Europäisches
Patentamt

European
Patent Office

Office européen
des brevets

# EUROPÄISCHER RECHERCHENBERICHT

Nummer der Anmeldung

EP 24 21 5003

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CH 682 348 A5 (BUEHLER AG [CH]) 31. August 1993 (1993-08-31) | 1-11 | INV. F04B13/00 |
| A | * Spalten 3,4; Abbildungen 1-3 *<br>- - - - - | 12 | F04B15/02 G01N11/04 |
| X | DE 27 19 626 A1 (WINTER HORST HENNING DR ING) 9. November 1978 (1978-11-09) * Seite 1, Absatz 1 - Seite 2, Absatz 1; Abbildung 1 *<br>- - - - - | 1-4,6,11 | |
| X | US 7 770 436 B2 (RHEOSENSE INC [US]) 10. August 2010 (2010-08-10) * Absatz [0033] *<br>- - - - - | 1-6,10 | |
| X | DE 10 2006 001180 A1 (UNIV CHEMNITZ TECH [DE]) 6. September 2007 (2007-09-06) * Absätze [0045] - [0047]; Abbildung 1 *<br>- - - - - | 1-4,11 | |

RECHERCHIERTE SACHGEBIETE (IPC)

F04B
G01N

Der vorliegende Recherchenbericht wurde für alle Patentansprüche erstellt

| Recherchenort | Abschlußdatum der Recherche | Prüfer |
|---|---|---|
| München | 8. April 2025 | Ziegler, Hans-Jürgen |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 21 5003

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-04-2025

| Im Recherchenbericht angeführtes Patentdokument | Datum der Veröffentlichung | Mitglied(er) der Patentfamilie | Datum der Veröffentlichung |
|---|---|---|---|
| CH 682348 A5 | 31-08-1993 | CH 682348 A5<br>DE 4220157 A1 | 31-08-1993<br>21-01-1993 |
| DE 2719626 A1 | 09-11-1978 | KEINE | |
| US 7770436 B2 | 10-08-2010 | US 2008134765 A1<br>WO 2009061943 A2 | 12-06-2008<br>14-05-2009 |
| DE 102006001180 A1 | 06-09-2007 | KEINE | |

Für nähere Einzelheiten zu diesem Anhang : siehe Amtsblatt des Europäischen Patentamts, Nr.12/82

EPO FORM P0461